# EUROPÄISCHE PATENTSCHRIFT

(11) **EP 0 881 864 B1**
(45) Veröffentlichungstag und Bekanntmachung des Hinweises auf die Patenterteilung: **07.08.2002**
(21) Anmeldenummer: 98108665.5
(22) Anmeldetag: 13.05.1998
(51) Int. Cl.: H05B 39/04, H02H 7/00

(54) **Schaltungsanordnung zum Betreiben elektrischer Glühlampen**
Circuit for operating incandescent lamps
Circuit pour l'alimentation des lampes incandescentes

(30) Priorität: 27.05.1997 DE 19722124
(43) Veröffentlichungstag der Anmeldung: 02.12.1998
(73) Patentinhaber: Patent-Treuhand-Gesellschaft für elektrische Glühlampen mbH, 81543 München (DE)
(72) Erfinder: Kiermeier, Theodor, 81475 München (DE)

(56) Entgegenhaltungen:
- EP-A- 0 647 084
- DE-A- 4 201 744
- DE-A- 19 543 720

## Beschreibung

### Technisches Gebiet

Die Erfindung betrifft Schaltungsanordnungen zum Betreiben von elektrischen Glühlampen, insbesondere von Niedervolt-Halogenglühlampen gemäß dem Oberbegriff des Anspruchs 1.

Diese Art von Schaltungsanordnungen enthält als Hauptbestandteil einen selbsterregten stromrückgekoppelten Wechselrichter in Halbbrückenschaltung, der die niederfrequente Netzspannung der elektrischen Versorgung in eine hochfrequente (HF) Spannung zerhackt. Zur Symmetrierung der gleichgerichteten Netzwechselspannung wird ein kapazitiver Spannungsteiler, der üblicherweise aus zwei Kondensatoren besteht, verwendet. Die Spannung am Verbindungspunkt dieser beiden Kondensatoren schwankt im Takt des HF-Wechselrichters etwa dreieckförmig um die Hälfte der Versorgungsspannung. Die HF-Spannung wird mit Hilfe eines Leistungsübertragers auf die Niederspannung der beispielsweise zu verwendenden Halogenglühlampen transformiert, also auf üblicherweise 6, 12 oder 24 V. Solche Schaltungsanordnungen werden deshalb auch als elektronische Transformatoren oder elektronische Konverter bezeichnet. Eine detailliertere Erläuterung der Funktionsweise elektronischer Konverter ist beispielsweise in der EP-PS 264 765 und der DE-OS 40 11 742 offenbart.

Um sowohl im Überlast- als auch im Kurzschlußfall, d.h. bei unzulässig niederohmiger Last, beispielsweise verursacht durch Parallelschalten mehrerer Lampen bzw. durch Kurzschließen der Lampenzuleitungen, eine Selbstzerstörung der Schaltungsordnung mit einhergehender Brandgefahr sowie Gefährdung von Personen zu verhindern, ist eine entsprechende Schutzeinrichtung unerläßlich. Für diesen Zweck ist zunächst eine Detektorschaltung erforderlich, welche im Überlast- bzw. Kurzschlußfall ein geeignetes Detektionssignal liefert. Der Kürze wegen wird diese Schaltung im folgenden auch als Überlast-Detektorschaltung bezeichnet. Das Detektionssignal dient dann als Steuersignal für einen Abschaltkreis, welcher den elektronischen Konverter zumindest vorübergehend abschaltet.

Nach der Abschaltung muß die hochfrequente Schwingung des Wechselrichters erneut initiiert werden. Gewöhnlich enthalten elektronische Konverter einen Start- oder Triggergenerator, der diese Aufgabe übernimmt. Andernfalls muß der elektronische Konverter kurzzeitig von der Versorgungsspannung getrennt werden. Nach erneutem Anlegen der Versorgungsspannung schwingt der Wechselrichter wieder an.

Als problematisch kann sich in diesem Zusammenhang die zuverlässige Überlasterkennung sowohl bei langen als auch bei kurzen Lampenzuleitungen erweisen, insbesondere bei hoher Nennlast. Je höher die Nennlast, desto kleiner ist nämlich der ohmsche Widerstand der Nennlast. Andererseits nimmt der ohmsche Widerstand einer Lampenzuleitung mit deren Länge zu. Folglich ist es insbesondere bei hoher (≡ niederohmiger) Nennlast schwierig, nur mit Hilfe des ohmschen Widerstands zwischen dem Fall "Nennlast mit kurzer Lampenzuleitung" und dem Fall "Überlast mit langer Lampenzuleitung" zuverlässig zu unterscheiden. Dabei darf die (niederohmige) Nennlast bei kurzer (niederohmige) Lampenzuleitung nicht als Fehler (Überlast bzw. Kurzschluß) detektiert werden. Die Unterscheidung zwischen Überlast und Nennlast bei kurzen Lampenzuleitungen wird zusätzlich durch Übergangswiderstände und Leitungsinduktivitäten erschwert.

### Stand der Technik

In der EP 0 647 084 A1 ist eine Schaltungsanordnung mit einem selbsterregten Halbbrückenwandler und einer Detektorschaltung offenbart. Die Detektorschaltung besteht aus einer Serienschaltung einer Diode und eines Widerstandes, die parallel zu dem mit Massepotential verbundenen Brückenkondensator geschaltet ist. Außerdem sind die Brückenkondensatoren und der Leistungsübertrager so dimensioniert, daß die Diode nur im Überlastfall leitend wird. Der serielle Widerstand wandelt dann den durch die Diode fließenden Strom in ein Spannungssignal, das als Detektionssignal dient und einen Abschaltkreis ansteuert. Nachteilig bei dieser Lösung ist, daß die Dimensionierung des Halbbrückenwandlers auf die Detektorschaltung abgestimmt werden muß.

Außerdem offenbart EP 0 647 084 A1 eine Schaltungsanordnung mit zwei Sensorschaltungen SA und SB, die die getrennte Detektion des Überlastbzw. Kurzschlußfalls mit entsprechend optimiertem Abschaltverhalten ermöglicht. Im Überlastfall wird nur von der Sensorschaltungen SB ein Sensorsignal B erzeugt, das einem Tiefpaß zugeführt wird. Am Ausgang dieses Tiefpaßes ist der Spitzenwert dieses Sensorsignals B unabhängig von der Leitungsinduktivität der Lampenzuführungen, um auch bei längeren Lampenzuführungen ein zuverlässiges Abschalten im Überlastfall zu gewährleisten. Die Sensorschaltungen SA erzeugt nur im Kurzschlußfall ein Sensorsignal A.

Die Schrift DE-A-4 201 744 offenbart ein Schaltnetzteil nach dem Halbbrückenwandlerprinzip mit Kurzschlußschutz und einer Zusatzschaltung für Niedervolthalogenlampen. Die Zusatzschaltung ist mit dem Verbindungspunkt der beiden Halbbrückenkondensatoren des Halbbrückenwandlers verbunden. Sinkt die Spannung an diesem Verbindungspunkt unterhalb eines Vergleichspegels, bewirkt die Zusatzschaltung eine zwangsweise Unterbrechung der Schwingung des Halbbrückenwandlers am Ende jeder Netzhalbwelle.

### Darstellung der Erfindung

Es ist Aufgabe der vorliegenden Erfindung, die eingangs genannten Nachteile zu vermeiden und eine Schaltungsanordnung gemäß dem Oberbegriff des Anspruchs 1 mit einer verbesserten Überlast- und Kurzschlußdetektion, insbesondere im Hinblick auf die Verwendung sowohl von kurzen als auch langen Lampenzuleitungen, bereitzustellen.

Diese Aufgabe wird durch die kennzeichnenden Merkmale des Anspruchs 1 gelöst. Besonders vorteilhafte Ausgestaltungen finden sich in den abhängigen Ansprüchen.

Der Grundgedanke der Erfindung basiert auf der Erkenntnis, daß die an einem der beiden Symmetrierkondensatoren des Halbbrücken-Wechselrichters abgegriffene hochfrequente Spitze-Spitze-Spannung U_{SS} einerseits unabhängig von der Länge der Lampenzuleitungen ist. Andererseits ist diese HF-Spannung U_{SS} direkt proportional zur angeschlossenen Last. Die Erfindung nutzt nun diese HF-Spannung Uₛₛ gezielt als Sensorsignal zum Ansteuern des Abschaltkreises im Überlast- bzw. Kurzschlußfall.

Zu diesem Zweck weist die erfindungsgemäße Schaltungsanordnung ein Hochpaßfilter auf, z.B. ein aus einem Filterkondensator und einem Widerstand bestehendes CR-Glied, dessen Eingang mit dem Verbindungspunkt der beiden Halbbrücken kondensatoren und dessen Ausgang mit dem Abschaltkreis verbunden ist. Dabei ist zu berücksichtigen, daß ein Filter im allgemeinen seine Filtereigenschaften bei Belastung ändert. Aus diesem Grunde ist die Auslegung des Filters an den Abschaltkreis anzupassen. Das Hochpaßfilter filtert aus dem am Verbindungspunkt abgegriffenen Signal ein der Höhe der Last entsprechendes Spannungssignal. Damit das Hochpaßfilter ein für die Ansteuerung des Abschaltkreises brauchbares Signal ausfiltert, ist das Filter geeignet ausgelegt. Zu diesem Zweck ist die Grenzfrequenz des Filters, falls die Schaltungsanordnung mit Gleichspannung betrieben wird, kleiner als die Arbeitsfrequenz des Wechselrichters gewählt. Bei Netzbetrieb ist zu berücksichtigen, daß die Amplitude des HF-Signals des Wechselrichters mit der Pulsfrequenz der Gleichrichterspannung, d.h. der doppelten Frequenz der Netzspannung -bei einer Netzfrequenz von z.B. 50 Hz entspricht dies also 100 Hz -, moduliert ist. Das Filter ist also so ausgelegt, daß einerseits Signale mit der Modulationsfrequenz abgeblockt werden. Außerdem ist die Arbeitsfrequenz des Wechselrichters moduliert. Dabei tritt jeweils die kleinste Arbeitsfrequenz im Amplitudenmaximum und die höchste Arbeitsfrequenz im Amplitudenminimum des Wechselrichtersignals auf. Folglich ist andererseits in diesem Fall die Grenzfrequenz kleiner als die größte auftretende Arbeitsfrequenz des Wechselrichters gewählt. Bevorzugt ist die Grenzfrequenz im Bereich zwischen der kleinsten und der größten auftretenden Arbeitsfrequenz des Wechselrichters gewählt.

Im Falle der Realisierung des Hochpaßfilters durch ein CR-Glied (Hochpaßfilter erster Ordnung) sind außerdem folgende Aspekte zu beachten. Um die HF-Symmetrie der Halbbrücke möglichst wenig zu beeinflussen, ist der Kapazitätswert des Filterkondensators C möglichst klein im Vergleich zur jeweiligen Kapazität der beiden Brückenkondensatoren. Insbesondere ist der Kapazitätswert des Filterkondensators C kleiner als ein Hundertstel des Kapazitätswerts eines Brückenkondensators. Der Widerstandswert des Widerstands R des CR-Gliedes beeinflußt die Höhe des Ausgangssignals des Hochpaßes, d.h. die Höhe des Eingangssignals des Signalformungs- und Abschaltkreises AK, und wird bevorzugt möglichst groß gewählt. Dabei ist allerdings die bekannte Beziehung f_{g} = (2 ·π·R·C)⁻¹ für die Grenzfrequenz f_{g} zu berücksichtigen. Demnach ist das Produkt R·C von Widerstands- und Kapazitätswert so zu wählen, daß die Grenzfrequenz f_{g} innerhalb des oben angegebenen Bereichs liegt.

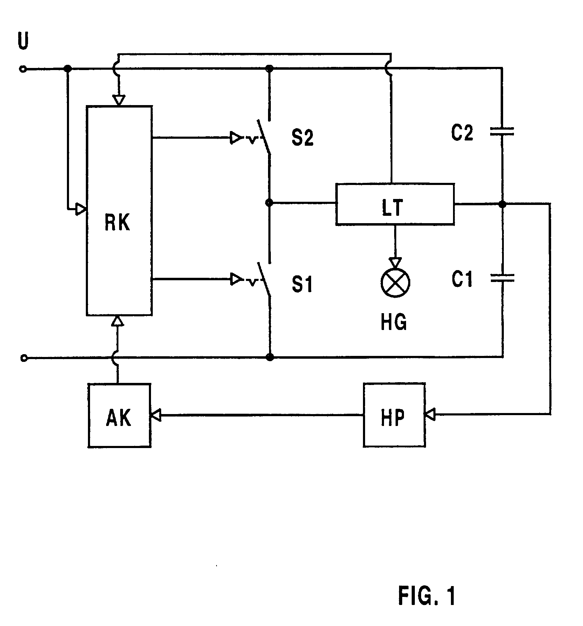

Zum besseren Verständnis des Erfindungsprinzips wird im folgenden auf die Figur 1 Bezug genommen. Gezeigt ist eine schematische Darstellung eines erfindungsgemäßen elektronischen Konverters mit einer Überlast-Detektorschaltung für den Betrieb von Niedervolt-Halogenglühlampen HG. Der Konverter besteht im wesentlichen aus einem von der Versorgungsspannung U gespeisten Halbbrückenwandler mit den beiden steuerbaren Brückenschaltern S1, S2 und den beiden Brückenkondensatoren C1, C2, einem Rückkoppel- und Steuerkreis RK zur Aufrechterhaltung der hochfrequenten Schwingung des Halbbrückenwandlers, der die Brückenschalter S1, S2 wechselweise ansteuert und gegebenenfalls auch einen Triggergenerator (nicht explizit dargestellt) zum Wiederanschwingen des Halbbrükkenwandlers beinhalten kann, einem Leistungsübertrager TR, der vom Halbbrückenwandler gespeist wird und einerseits mit einer Niedervolt-Halogenglühlampe HG verbunden und andererseits an den Rückkoppelund Steuerkreis RK gekoppelt ist, einem Hochpaß HP, der die eigentliche Detektorschaltung darstellt und dessen Eingang mit dem Verbindungspunkt V der beiden Brückenkondensator C1,C2 verbunden ist, und schließlich einem Abschaltkreis AK, dessen Eingang mit dem Ausgang des Hochpaßes HP und dessen Ausgang mit dem Rückkoppel- und Steuerkreis RK verbunden ist. Der Hochpaß HP führt dem Abschaltkreis AK ein für die Höhe der angeschlossenen Last charakteristisches Signal zu. Im Überlastbzw. Kurzschlußfall bewirkt dieses Signal, daß der Abschaltkreis AK mit Hilfe des Rückkoppel- und Steuerkreises RK die Schwingung des Halbbrükkenwandlers unterbricht.

Die Vorteile der erfindungsgemäßen Schaltungsanordnung sind unter anderem: a) zuverlässige Detektion von Überlast- bzw. Kurzschlußfall auch bei langen Lampenzuleitungen; b) Überlast wird auch erkannt, wenn sie nicht durch eine einzige Lampe gebildet wird, sondern erst durch paralleles Hinzuschalten weiterer, anfangs kalter und folglich niederohmiger Lampen entsteht (sogenannter schleichender Kurzschluß), woraus eine größere Freiheit bei der Dimensionierung des Abschaltskreises resultiert; c) die Verlustleistung ist im Vergleich mit bisherigen Lösungen geringer; d) die Dimensionierung der Bauelemente im primären Lastkreis ist unabhängig von der Dimensionierung der Detektionsschaltung und kann folglich auf ihre jeweilige Aufgabe hin optimiert werden.

### Beschreibung der Zeichnungen

Im folgenden wird die Erfindung anhand eines Ausführungsbeispiels näher erläutert. Es zeigen:
- Figur 1: ein Prinzipschaltbild eines elektronischen Konverters mit einer Überlast-Detektorschaltung für den Betrieb von Niedervolt-Halogenglühlampen,
- Figur 2: ein elektrisches Schaltbild eines elektronischen Konverters mit einer Überlast-Detektionsschaltung für den Betrieb von Niedervolt-Halogenglühlampen.

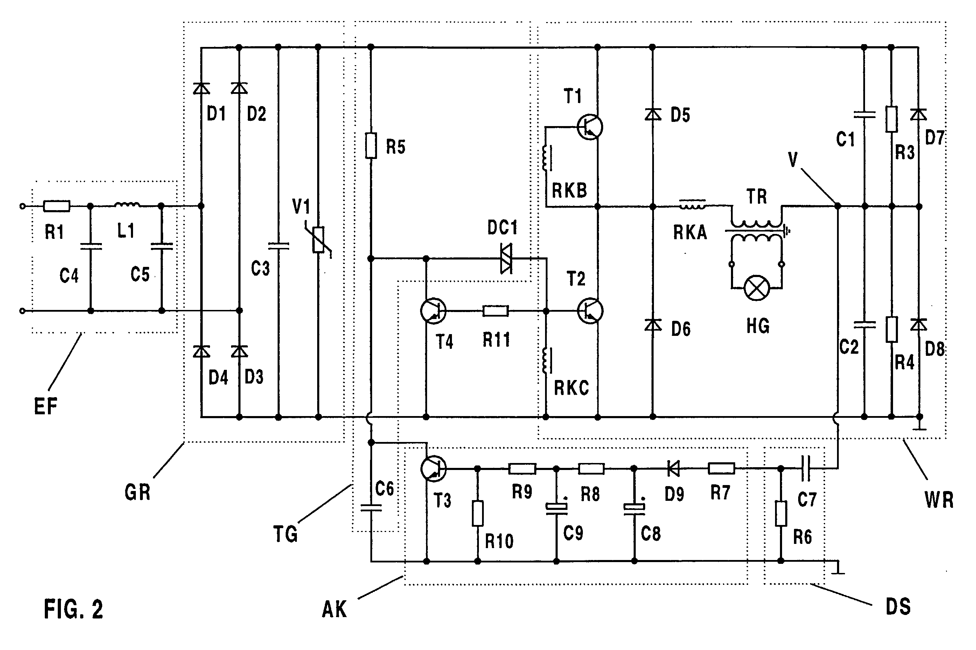

Figur 2 zeigt ein elektrisches Schaltbild eines erfindungsgemäßen elektronischen Konverters für den Betrieb von Niedervolt-Halogenglühlampen. Die Schaltungsanordnung weist folgende Funktionsblöcke auf: ein Eingangsfilter EF zur Unterdrückung von Gegentakt-Störströmen, ein Gleichrichter GR, ein selbstschwingender stromrückgekoppelter Wechselrichter WR in Halbbrückenschaltung, ein Triggergenerator TG zum Starten des Wechselrichters WR, eine Überlast-Detektorschaltung DS sowie ein Überlast-Abschaltkreis AK.

Der Eingangsfilter EF besteht aus einem Collins-Filter in Π-Schaltung mit einer Drossel L1 im Längs- und je einem Kondensator C4, C5 in den beiden Querzweigen.

Der Gleichrichter GR besteht aus einer Diodenvollbrücke D1-D4, deren Minuspol mit dem Massepotential der Schaltung verbunden und im folgenden das Bezugspotential ist, und einen Siebkondensator C3 sowie einen Varistor V1 als Überspannungsschutz, welche jeweils parallel zum Ausgang der Diodenvollbrücke D1-D4 geschaltet sind.

Der Wechselrichter WR besteht im wesentlichen aus den beiden NPN-Halbbrückentransistoren T1,T2 - ihnen ist je eine Rückflußdiode D5, D6 parallel geschaltet -, dem Halbbrückenkondensatoren C1, C2 mit je einer parallel geschalteten Diode D7, D8 sowie je einem parallel geschalteten Widerstand R3, R4 zur Symmetrierung und dem Steuertransformator RKA-RKC für die Stromrückkopplung. Außerdem weist der Wechselrichter WR einen Leistungsübertrager TR auf, an dessen Sekundärwicklung eine Niedervolt-Halogenglühlampe HG betrieben wird.

Der Triggergenerator TG besteht aus dem Widerstand R5, dem Ladekondensator C6 und dem Diac DC1. Der Ladekondensator C6 des Triggergenerators wird über den seriellen Widerstand R5 aufgeladen. Sobald die Spannung des Ladekondensators C6 die Zündspannung des Diac DC1 erreicht, zündet der Diac DC1 durch und legt eine Triggerspannung an die Basis des mit dem Bezugspotential verbundenen Halbbrückentransistors T2.

Die Überlast-Detektorschaltung DS besteht aus einem als Hochpaß wirkenden CR-Glied C7,R6. Der Eingang des CR-Gliedes C7,R6 ist mit dem Verbindungspunkt V der beiden Halbbrückenkondensatoren C1, C2 verbunden. Das CR-Gliedes C7,R6 filtert aus dem am Verbindungspunkt V abgegriffenen Signal ein der an den Ausgangsklemmen der Leistungsübertragers TR wirksamen Last entsprechendes Steuersignal für den nachfolgenden Überlast-Abschaltkreis AK.

Der Überlast-Abschaltkreis AK weist in seinem Eingang eine Diode D9 zur Spitzenwertgleichrichtung auf. Danach folgt ein Doppel-RC-Glied R7,C8 und R8,C9. Dabei dient der Kondensator C8 dem Kondensator C9 als Nachladereservoir. Mit Hilfe des Doppel-RC-Gliedes R7,C8,R8,C9 wird einerseits die Zeitverzögerung bis zum Abschalten und andererseits die Zeitverzögerung für ein Wiedereinschalten des Wechselrichters geeignet gewählt. Durch die beiden nachfolgenden Widerstände R9,R10 wird schließlich die Schwellenspannung für den nachfolgenden Abschalttransistor T3 eingestellt.

Ein parallel zum Ladekondensator C6 des Triggergenerators TG geschalteter NPN-Transistor T4 verhindern die Entstehung von Triggerimpulsen während die Halbbrücke schwingt. Zu diesem Zweck ist die Basis des Transistors T4 über den Vorwiderstand R11 mit der Basis des ebenfalls vom Triggergenerator TG angesteuerten Halbbrückentransistors T2 verbunden. Die genaue Funktionsweise dieses Schaltungsdetails ist in der EP 0 682 465 A1 erläutert.

Die folgende Tabelle listet Bauteile der für eine maximale Lampenleistung von 150 W ausgelegten Schaltungsanordnung aus Figur 2 auf.

| **Bauteil(e)** | **Bauteilewert / -bezeichnung** |
|---|---|
| R1 | 0,27 Ω |
| R3 - R5 | 330 kΩ |
| R6, R8 | 10 kΩ |
| R7, R11 | 1 kΩ |
| R9 | 270 kΩ |
| R10 | 12 kΩ |
| C1, C2 | 100 nF |
| C3 | 47 nF |
| C4, C5 | 220 nF |
| C6 | 15 nF |
| C8, C9 | 4,7 µF |
| TR | Windungszahlen: 55/6 Induktivitäten: 10 mH/50 µH |
| L1 | 1,5 mH |
| D1-D4 | GP15M |
| D5 - D8 | 1N4937 |
| D9 | LL4148 |
| T1, T2 | BUF 654 |
| T3, T4 | BC850C |

## Patentansprüche

1. Schaltungsanordnung zum Betreiben von elektrischen Glühlampen, insbesondere von Niedervolt-Halogenglühlampen, an einem Wechselspannungsnetz oder einer Gleichspannungsquelle mit
• einem zwei steuerbare Halbbrückenschalter (S1, S2; T1, T2) aufweisenden und über einen Steuerübertrager (RK; RKA-RKC) stromrückgekoppelten selbstschwingenden Halbbrückenwandler,
• zwei Halbbrückenkondensatoren (C1, C2),
• einem Leistungsübertrager (TR), dessen Primärwicklung einerseits an den Steuerübertrager (RKA-RKC) gekoppelt ist sowie andererseits mit dem Verbindungspunkt der beiden Halbbrückenkondensatoren (C1, C2) kontaktiert ist und an dessen Sekundärwicklung die Glühlampe(n) (HG) anzuschließen ist (sind),
• einer Überlast-Detektorschaltung (DS),
• einem mit der Überlast-Detektorschaltung (DS) verbundenen Abschaltkreis (AK), der im Überlast- bzw. Kurzschlußfall den Halbbrückenwandler zumindest vorübergehend abschaltet,
**dadurch gekennzeichnet, daß** die Überlast-Detektorschaltung (DS) aus einem Hochpaßfilter (HP; C7, R6) besteht, dessen Eingang mit dem Verbindungspunkt (V) der beiden Halbbrückenkondensatoren (C1, C2) verbunden ist und dessen Ausgang mit dem Eingang des Abschaltkreises (AK) verbunden ist.

2. Schaltungsanordnung nach Anspruch 1, **dadurch gekennzeichnet, daß** die Grenzfrequenz des Hochpaßfilters (HP; C7, R6) im Bereich zwischen der kleinsten und der größten auftretenden Arbeitsfrequenz des selbstschwingenden Halbbrückenwandlers (WR) liegt.

3. Schaltungsanordnung nach Anspruch 1, **dadurch gekennzeichnet, daß** die Grenzfrequenz des Hochpaßfilters (HP; C7, R6) größer als die doppelte Frequenz der Netzwechselspannung (U_{N}) ist.

4. Schaltungsanordnung nach einem der vorstehenden Ansprüche, **dadurch gekennzeichnet, daß** das Hochpaßfilter (HP) aus einem Filterkondensator (C7) und einem Widerstand (R6) besteht, die als CR-Glied geschaltet sind.

5. Schaltungsanordnung nach Anspruch 4, **dadurch gekennzeichnet, daß** die Kapazitätswert des Filterkondensators (C7) klein im Vergleich zur jeweiligen Kapazität der beiden Halbbrückenkondensatoren (C1, C2) ist.

6. Schaltungsanordnung nach Anspruch 5, **dadurch gekennzeichnet, daß** der Kapazitätswert des Filterkondensators (C7) etwa ein Hundertstel des Kapazitätswerts eines Halbbrückenkondensators (C1, C2) beträgt.

## Claims

1. Circuit arrangement for operating electrical incandescent lamps, in particular low-voltage incandescent halogen lamps, from an AC voltage mains or a DC voltage source, having
• a free-running half-bridge converter which has two controllable half-bridge switches (S1, S2; T1, T2) and exhibits current feedback via a control transformer (RK; RKA-RKC),
• two half-bridge capacitors (C1, C2),
• a power transformer (TR), whose primary winding is on the one hand coupled to the control transformer (RKA-RKC) and on the other hand is contact-connected to the junction point of the two half-bridge capacitors (C1, C2) and to whose secondary winding the incandescent lamp(s) (HG) is (are) to be connected,
• an overload detector circuit (DS),
• a turn-off circuit (AK) which is connected to the overload detector circuit (DS) and turns off the half-bridge converter at least temporarily in the event of an overload or short circuit,
**characterized in that** the overload detector circuit (DS) comprises a high-pass filter (HP; C7, R6), whose input is connected to the junction point (V) of the two half-bridge capacitors (C1, C2) and whose output is connected to the input of the turn-off circuit (AK).

2. Circuit arrangement according to Claim 1, **characterized in that** the limiting frequency of the high-pass filter (HP; C7, R6) lies in the range between the smallest and the largest operating frequency that occurs for the free-running half-bridge converter (WR).

3. Circuit arrangement according to Claim 1, **characterized in that** the limiting frequency of the high-pass filter (HP; C7, R6) is greater than twice the frequency of the mains AC voltage (U_{N}).

4. Circuit arrangement according to one of the preceding claims, **characterized in that** the high-pass filter (HP) comprises a filter capacitor (C7) and a resistor (R6), which are connected as a CR element.

5. Circuit arrangement according to Claim 4, **characterized in that** the capacitance of the filter capacitor (C7) is small compared with the respective capacitance of the two half-bridge capacitors (C1, C2).

6. Circuit arrangement according to Claim 5, **characterized in that** the capacitance of the filter capacitor (C7) is about a hundredth of the capacitance of a half-bridge capacitor (C1, C2).

## Revendications

1. Circuit pour faire fonctionner des lampes électriques à incandescence, notamment des lampes à incandescence à halogène basse tension, sur un réseau de tension alternative ou sur une source de tension continue, comportant
• un convertisseur à demi-pont auto-oscillant comportant deux interrupteurs de demi-pont commandables (S1, S2 ; T1, T2) et à réaction de courant par l'intermédiaire d'un transformateur de commande (RK ; RKA à RKC),
• deux condensateurs de demi-pont (C1, C2),
• un transformateur de puissance (TR) dont l'enroulement primaire est relié d'une part au transformateur de commande (RKA à RKC) et d'autre part au point de jonction des deux condensateurs de demi-pont (C1, C2) et à l'enroulement secondaire duquel la ou les lampes à incandescence (HG) sont raccordées,
• un circuit détecteur de surcharge (DS),
• un circuit de coupure (AK) qui est relié au circuit détecteur de surcharge (DS) et qui coupe au moins provisoirement le convertisseur à demi-pont en cas de surcharge ou de court-circuit,
**caractérisé par le fait que** le circuit détecteur de surcharge (DS) est constitué d'un filtre passe-haut (HP ; C7, R6) dont l'entrée est reliée au point de jonction (V) des deux condensateurs de demi-pont (C1, C2) et dont la sortie est reliée à l'entrée du circuit de coupure (AK).

2. Circuit selon la revendication 1, **caractérisé par le fait que** la fréquence de coupure du filtre passe-haut (HP ; C7, R6) se trouve dans la plage comprise entre la plus petite et la plus grande fréquence de travail apparaissant du convertisseur à demi-pont (WR) auto-oscillant.

3. Circuit selon la revendication 1, **caractérisé par le fait que** la fréquence de coupure du filtre passe-haut (HP ; C7, R6) est supérieure au double de la fréquence de la tension alternative de réseau (U_{N}).

4. Circuit selon l'une des revendications précédentes, **caractérisé par le fait que** le filtre passe-haut (HP) est constitué d'un condensateur de filtrage (C7) et d'une résistance (R6) qui sont branchés en un élément CR.

5. Circuit selon la revendication 4, **caractérisé par le fait que** la valeur capacitive du condensateur de filtrage (C7) est petite en comparaison de la capacité respective des deux condensateurs de demi-pont (C1, C2).

6. Circuit selon la revendication 5, **caractérisé par le fait que** la valeur capacitive du condensateur de filtrage (C7) vaut environ un centième de la valeur capacitive d'un condensateur de demi-pont (C1, C2).
